Europäisches Patentamt

European Patent Office

Office européen des brevets

(19)

(11) Veröffentlichungsnummer: **0 489 304 A2**

# (12) EUROPÄISCHE PATENTANMELDUNG

(21) Anmeldenummer: **91119805.9**

(22) Anmeldetag: **21.11.91**

(51) Int. Cl.5: **F16F 1/26**

(30) Priorität: **01.12.90 DE 4038429**

(43) Veröffentlichungstag der Anmeldung:
**10.06.92 Patentblatt 92/24**

(84) Benannte Vertragsstaaten:
**AT BE CH DE ES FR GB IT LI NL SE**

(71) Anmelder: **BASF Aktiengesellschaft
Carl-Bosch-Strasse 38
W-6700 Ludwigshafen(DE)**

(72) Erfinder: **Leonhard, Christian
H 2,1
W-6800 Mannheim 1(DE)**
Erfinder: **Jakobi, Reinhard, Dr.
Burgunderstrasse 26
W-6701 Maxdorf(DE)**
Erfinder: **Paulus, Wolf-Ruediger
Rosenstrasse 16
W-6800 Neu Edingen, Post MA 71(DE)**

(54) **Blattfeder aus Faserverbundwerkstoff.**

(57) Für die Krafteinleitung bei Blattfedern aus Faserverbundwerkstoff sind an wenigstens einem Federende (1) ein Federaugenkörper (2) und ein gegebenenfalls mit dem Federaugenkörper eine Baueinheit bildendes Klemmelement (3) vorgesehen. Das Federende ist keilförmig augebildet. Die Endabschnitte (4,5) des Klemmelements liegen an den entsprechenden Flächen des Federendes an, wobei zwischen der Keilfläche (6) und dem Endabschnitt (5) ein Metallkeil (7) eingesetzt ist, durch den in Verbindung mit einem die Endabschnitte umfassenden Ring (9) der Federaugenkörper am Federende befestigt ist. Zwecks Erzielung einer besonders sicheren Verbindung zwischen Klemmelement und Federende sind das Federende, der Metallkeil und die Endabschnitte sowie gegebenenfalls der die Endabschnitte umfassende Ring zusätzlich durch Schraubverbindungen (10) miteinander verspannt.

FIG.1

Die Erfindung betrifft eine Blattfeder aus Faserverbundwerkstoff nach dem Oberbegriff des Patentanspruchs 1.

Eine Blattfeder dieser Art ist aus der DE-A-39 20 926 bekannt. Dabei sind die Federaugenkörper zum Anschluß an ein aufgehängtes oder nichtaufgehängtes Bauteil an den Federenden angebracht und jeweils mit Hilfe eines den Federaugenkörper umschlingenden Klemmelements an den Endabschnitten der Feder befestigt. Die form- und kraftschlüssige Verbindung des Klemmelementes mit der Feder erfolgt durch eine Profilierung der Kontaktflächen sowie durch mechanische Befestigungsmittel, wie Spannhülsen oder Durchgangsschrauben, die jedoch nur im äußeren Bereich des Federendes, d.h. im Bereich niedriger Biegespannungen vorgesehen werden können. In stark biegebelasteten Bereichen der Feder sind die für Spannhülsen und Durchgangsschrauben zwangsläufig erforderlichen Bohrungen häufig Ausgangspunkt von Laminatrissen. Darüber hinaus hängt die Reibkraft zwischen dem Federkörper und dem Klemmelement im wesentlichen von der Vorspannkraft der Befestigungsmittel ab. Ein Relaxieren des Faserverbundwerkstoffes führt im allgemeinen zu einer Verringerung der Haltekraft, so daß sich die Verbindung zwischen dem metallischen Klemmelement und dem Federkörper lockert. Bei dynamischer Belastung der Blattfeder ergeben sich Relativbewegungen zwischen dem Federaugenkörper und der Feder und damit nicht kontrollierbare Kraftumlagerungen sowie erhöhter Verschleiß.

Weiterhin beschreibt die EP-B-0 242 548 eine Blattfeder für Kraftfahrzeuge, bei der der Federkörper eine obere und eine untere Schicht aus gerichteten Fasern aufweist, die durch eine mittlere Verbundschicht miteinander verhaftet sind. Der Federkörper läuft im wesentlichen ohne Faserrichtungsänderung in ein Krafteinleitungsteil ein. Er ist durch das Krafteinleitungsteil endseitig vollkommen umschlossen und vornehmlich durch Klemmung gehalten. Hierzu ist das Federende keilförmig gestaltet und das Krafteinleitungsteil in einer Ebene im wesentlichen parallel zur neutralen Faser des Federkörpers geteilt ausgebildet. Die beiden Teile des Krafteinleitungsteils sind durch Klemmschrauben zusammengespannt. Auf diese Weise lassen sich jedoch Fertigungsungenauigkeiten nur bedingt ausgleichen.

Mit der Erfindung soll eine Blattfeder aus Faserverbundwerkstoff mit einer Befestigungseinrichtung an wenigstens einem Federende geschaffen werden, die einfach herzustellen ist und insbesondere Biegespannungen in der Befestigungseinrichtung, die aus Fertigungsungenauigkeiten resultieren, vermeidet. Als Besonderheit sind zusätzlich sogenannte Notlaufeigenschaften der Befestigungseinrichtung gefordert.

Zur Lösung dieser Aufgabe werden die Maßnahmen nach dem Kennzeichen des Anspruchs 1 vorgeschlagen.

Erfindungsgemäß werden das Federende und das den Federaugenkörper umschlingende Klemmelement form- und kraftschlüssig miteinander verbunden. Hierzu ist das Federende innerhalb der Endabschnitte des Klemmelements keilförmig gestaltet, wobei die entsprechende Aufdickung bzw. Materialanhäufung sowohl beidseitig, d.h. auf der Zug- und Druckseite der Feder, als auch einseitig, d.h. nur auf der Druckseite ausgebildet sein kann. Die Druckseite bietet sich deshalb an, weil hier Faserumlenkungen unkritisch sind. Die Keilform am Federende läßt sich, je nach Größe des Keilwinkels, auch bereits beim Herstellen des Federkörpers anformen, indem dieser Bereich einen, verglichen mit dem übrigen Federkörper, höheren Harzanteil erhält. Bei der Herstellung der Feder ist in diesem Fall kein zusätzliches Material vorzusehen. Die Keilform am Federende ergibt sich durch in Faserrichtung fließendes Harz, welches beim Preßvorgang aus dem Faser-Matrixverbund ausgetrieben wird.

Der Federaugenkörper sowie das zu seiner Befestigung am Federende vorgesehene Klemmelement bestehen im allgemeinen aus einem metallischen Werkstoff, beispielsweise aus einer Aluminiumlegierung. Federaugenkörper und Klemmelement können gegebenenfalls auch eine Baueinheit bilden.

Zwischen einem Endabschnitt des Klemmelements und der entsprechenden Keilfläche des Federendes ist ein Metallkeil eingesetzt, wodurch Fertigungsungenauigkeiten besonders einfach ausgeglichen werden können, ohne daß sich Biegespannungen in dem Klemmelement oder in sonstigen Befestigungsmitteln ergeben, wenn mit Hilfe der Befestigungsmittel die kraftschlüssige Verbindung hergestellt wird. Der Federaugenkörper kann spielfrei am Federende montiert werden.

Nach einem weiteren Merkmal der Erfindung enthält die Keilfläche des Federendes eine Ausnehmung. Diese kann in Form eines Kegelabschnitts oder eines Kegelstumpfabschnitts ausgebildet sein. Hierdurch läßt sich der Harzgehalt im Bereich der Keilfläche vermindern, so daß Kriechphänomene nicht auftreten. Zudem können Delaminationen und Faserwelligkeiten vermieden werden.

Um eine besonders innige Verbindung zwischen dem Metallkeil und dem jeweiligen Endabschnitt des Klemmelements zu erzielen, ist es weiterhin möglich, den Metallkeil auf seiner an dem Endabschnitt anliegenden Fläche und den betreffenden Endabschnitt selbst mit sägezahnförmigen Erhebungen zu versehen.

Das Klemmelement ist zudem durch einen seine Endabschnitte außen umfassenden Ring und/oder sie durchdringende Schrauben, Niete u. dgl. am Federende befestigt. Geeignete Materialien für den Ring sind Metalle sowie Faserverbundwerkstoffe. Der Ring verhindert das Aufbiegen der Endabschnitte des Klemmelements insbesondere bei Zugbelastung der Blattfeder. Außerdem gewährleistet er Notlaufeigenschaften beim etwaigen Versagen der übrigen Befestigungsmittel.

In einer besonders bevorzugten Ausführungsform der Blattfeder ist die Profildicke wenigstens eines Endabschnitts an seinem freien Ende vergrößert. Dadurch wird das Federende, bedingt durch das Zusammenwirken von Metallkeil und den die Endabschnitte umfassenden Ring, zuverlässig in der Befestigungsrichtung gehalten.

Nach einem weiteren Merkmal der Erfindung sind das Federende, der Metallkeil und die Endabschnitte des Klemmelements durch Schraubverbindungen miteinander verspannt. Die Schraubverbindungen können außerhalb aber auch im Bereich des die Endabschnitte des Klemmelements umfassenden Ringes angebracht sein. Auf diese Weise ergibt sich zusätzlich eine Vergleichmäßigung der durch den Ring in Verbindung mit dem Metallkeil erzeugten Vorspannung, so daß kaum eine Bruchgefahr an der bei Blattfedern kritischen Stelle zwischen dem Federende und dem Federauge besteht.

Die Erfindung wird nachfolgend unter Hinweis auf die Zeichnungen anhand zweier Ausführungsbeispiele erläutert.

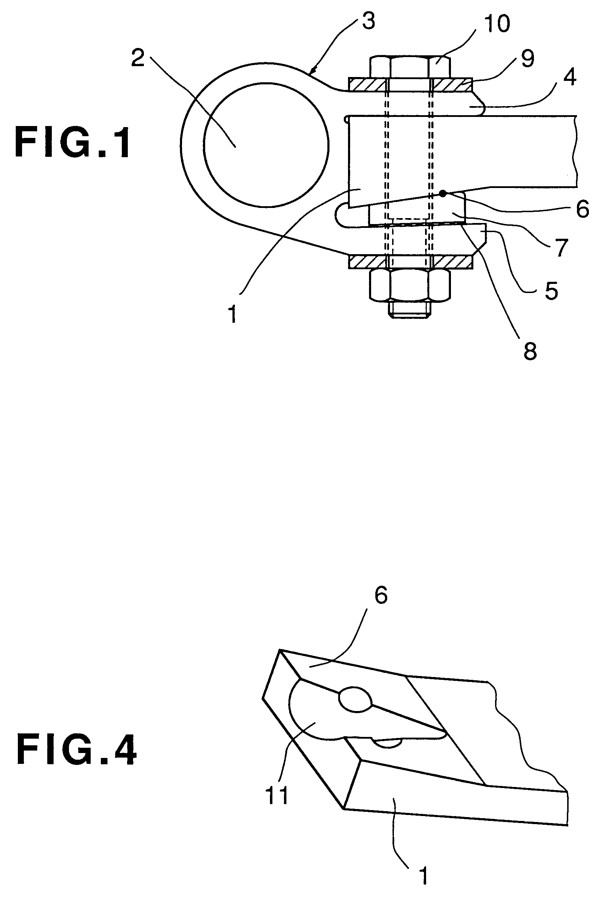

Gemäß Figur 1 ist die Feder aus Faserverbundwerkstoff bzw. das keilförmige Federende mit (1) bezeichnet. An der Stirnseite der Feder ist ein Federaugenkörper (2) vorgesehen, welcher mit Hilfe eines mit dem Federaugenkörper eine Baueinheit bildenden Klemmelements (3) am Federende befestigt ist. Hierzu liegt der Endabschnitt (4) mit seiner inneren Fläche unmittelbar an der Feder an. Auf der Druckseite der Feder, d.h. auf der Seite, auf der die keilförmige Erhebung ausgebildet ist, ist zwischen dem Endabschnitt (5) und der Keilfläche (6) des Federendes ein Metallkeil (7) eingesetzt. Die Keilfläche enthält eine Ausnehmung (11) (Fig. 4). Die aneinanderliegenden Flächen des Endabschnitts (5) und des Keils sind insgesamt nichteben und zumindest annähernd komplementär zueinander ausgebildet. Im dargestellten Ausführungsbeispiel sind mit (8) sägezahnförmige Erhebungen bezeichnet. Mit Hilfe eines die Endabschnitte (4, 5) des Klemmelements (3) umfassenden Ringes (9) sowie zweier Durchgangsschrauben (10) erfolgt die form- und kraftschlüssige Verbindung des Federaugenkörpers (2) mit der Feder. Dabei sind die Durchgangsschrauben, von denen nur eine sichtbar ist, im Bereich des Ringes (9) angebracht.

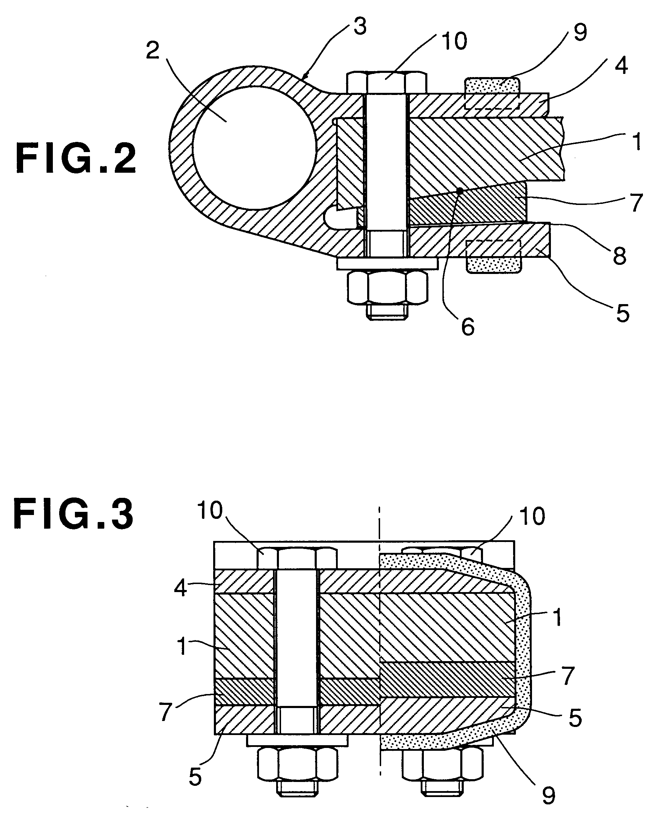

Bei der in den Figuren 2 und 3 gezeigten Ausführungsform der Blattfeder ist der Ring (9) nicht im Bereich der Durchgangsschrauben (10) angebracht, sondern vor diesen am freien Ende des Klemmelements (3) - Endabschnitte (4, 5).

Zur Montage der Blattfeder wird zunächst der Ring (9) auf das den Federaugenkörper (2) umschlingende Klemmelement (3), d.h. auf dessen Endabschnitte (4, 5) aufgebracht und das keilförmige Federende (1) in den Federaugenkörper eingeführt. Mit dem Eintreiben des Metallkeils (7) zwischen die Keilfläche (6) und den Endabschnitt (5) wird die Verbindung geringfügig vorgespannt. Anschließend werden die Endabschnitte des Klemmelements und die Feder, gegebenenfalls auch der Ring durchbohrt und die Bauteile durch wenigstens zwei Durchgangsschrauben (10) miteinander verspannt.

Es ist auch möglich, das Klemmelement (3) einschließlich Ring (9) zu erwärmen und dann das keilförmige Federende (1) in den Federaugenkörper (2) einzuführen. Durch das nachfolgende Abkühlen ergibt sich eine Verbindung mit hoher Vorspannung.

## Patentansprüche

1. Blattfeder aus Faserverbundwerkstoff mit einem Federaugenkörper an wenigstens einem Federende und einem Klemmelement, welches den Federaugenkörper umschlingt und Endabschnitte aufweist, die mit dem Federende form- und kraftschlüssig verbunden sind, dadurch gekennzeichnet, daß das Federende (1) keilförmig ausgebildet, zwischen wenigstens einem Endabschnitt (4,5) und der entsprechenden Keilfläche (6) des Federendes ein Metallkeil (7) eingesetzt und das Klemmelement (3) durch die Endabschnitte (4,5) umfassende und/oder durchdringende Befestigungsmittel (9,10) am Federende befestigt ist.

2. Blattfeder nach Anspruch 1, dadurch gekennzeichnet, daß die Keilfläche (6) des Federendes (1) eine Ausnehmung (11) enthält.

3. Blattfeder nach Anspruch 1, dadurch gekennzeichnet, daß das Federende (1) auf der Zug- und Druckseite eine Keilfläche (6) aufweist.

4. Blattfeder nach Anspruch 1, dadurch gekennzeichnet, daß der Metallkeil (7) auf seiner an dem Endabschnitt (4,5) anliegenden Fläche sägezahnförmige Erhebungen (8) besitzt und der Endabschnitt zumindest annähernd komplementär hierzu ausgebildet ist.

5. Blattfeder nach Anspruch 1, dadurch gekennzeichnet, daß die Profildicke wenigstens eines Endabschnitts (4, 5) an seinem freien Ende vergrößert ist.

6. Blattfeder nach Anspruch 1, dadurch gekennzeichnet, daß das Federende (1), der Metallkeil (7) und die Endabschnitte (4,5) des Klemmelements (3) durch Schraubenverbindungen (10) miteinander verspannt sind.

7. Blattfeder nach Anspruch 6, dadurch gekennzeichnet, daß die Schraubverbindungen (10) im Bereich des die Endabschnitte (4,5) des Klemmelements (3) umfassenden Ringes (9) angebracht sind.

8. Blattfeder nach einem oder mehreren der vorhergehenden Ansprüche, dadurch gekennzeichnet, daß der Federaugenkörper (2) und das Klemmelement (3) eine Baueinheit bilden.

# FIG.1

# FIG.4

# FIG.2

# FIG.3